# EUROPÄISCHE PATENTANMELDUNG

(11) **EP 0 631 412 A2**
(43) Veröffentlichungstag der Anmeldung: **28.12.1994**
(21) Anmeldenummer: 94107311.6
(22) Anmeldetag: 10.05.1994
(51) Int. Cl.: H04L 12/56, H04Q 11/04

(54) **Verfahren und Schaltungsanordnung zur Übertragung von ATM-Paketen**

(30) Priorität: 28.05.1993 DE 4317951
(71) Anmelder: SIEMENS AKTIENGESELLSCHAFT, D-80333 München (DE)
(72) Erfinder: Göldner, Ernst-Heinrich, Dr., D-81545 München (DE)

(57) **Zusammenfassung**

Die Übertragung der Nachrichtenpakete nach dem Asynchronen Transfermodus erfolgt auf mindestens zwei völlig unterschiedlichen Übertragungswegen mit voneinander getrennten ATM-Vermittlungseinrichtungen (ASW1..., ASW2...) oder ATM-Cross-Connectoren (ACC1..., ACC2) . Durch eine beim jeweiligen Teilnehmer des Netzes angeordnete Anschlußsteuereinrichtung (CCU) erfolgt ein Erfassen von sendeseitig ausgesandten und auf den verschiedenen Übertragungswegen vermittelten Test-Nachrichtenpaketen, ein Ausgleich der durch die unterschiedlichen Übertragungswege bedingten Laufzeitunterschiede der Nachrichtenpakete anhand der Empfangszeitpunkte, und eine Ausgabe eines von mehreren auf den verschiedenen Übertragungswegen übertragenen identischen Nachrichtenpaketen.

## Beschreibung

Die Erfindung betrifft ein Verfahren und eine Schaltungsanordnung zur Übertragung von Nachrichtenpaketen nach dem Asynchronen Transfermodus (ATM) im Auge von virtuellen Verbindungen über mindestens eine ATM-Vermittlungseinrichtung oder einen ATM-Cross-Connector in einem mehrere Teilnehmer aufweisenden Kommunikationsnetz.

Die Kommunikation in öffentlichen wie in privaten Netzen muß eine ununterbrochene, störungsfreie Übertragung von Nachrichtenpaketen nach dem Asynchronen Transfermodus (ATM) zwischen den Teilnehmern ermöglichen. Insbesondere beim Austausch von Daten werden hohe Anforderungen an die Verfügbarkeit der Verbindungen im gesamten ATM-Kommunikationsnetz gestellt. Dies gilt beispielsweise für die Teilnehmer eines Breitband-Kommunikationsnetzes, z.B. des Breitband-ISDN (Integrated Services Digital Network), mit Datenanwendungen im kommerziellen Bereich, wie z.B. bei der Kopplung mehrerer Rechenzentren oder interner Datennetze (Local Area Network, Metropolitan Area Network). Derartige Anwendungen sind durch eine hohe Datenrate einer einzelnen ATM-Übertragungsleitung (z.B. 150 Mbit/s) gekennzeichnet, bei deren Ausfall eine Vielzahl von Teilnehmern betroffen ist.

In diesem Zusammenhang ist es aus der EP-A1 0 384 936 bekannt, eine ATM-Vermittlungseinrichtung redundant auszulegen, um einen störungsfreien Vermittlungsbetrieb für jede der virtuellen Verbindungen im ATM-Kommunikationsnetz zu gewährleisten. Darüber hinaus gibt es bei ATM-Cross-Connectoren Ersatzschaltemaßnahmen für den Fall, daß Verbindungen wegen Leitungsausfällen oder dergleichen kurzfristig nicht zur Verfügung stehen. Für die Sicherstellung einer hohen Verfügbarkeit der Verbindungen ist es erforderlich, daß die Teilnehmer selbst zwischen einer benutzten Anschlußleitung und einer zusätzlichen Stand-by-Anschlußleitung umschalten müssen Damit ist eine unterbrechungsfreie Verbindung zwischen den Teilnehmern des Datenaustausches nicht möglich.

Es ist Aufgabe der vorliegenden Erfindung, ein Verfahren bzw. eine Schaltungsanordnung der eingangs genannten Art derart auszugestalten, daß eine ununterbrochene, störungsfreie Übertragung der Nachrichtenpakete nach dem Asynchronen Transfermodus zwischen den Teilnehmern netzweit gegeben ist.

Diese Aufgabe wird bezüglich des Verfahrens durch die Merkmale des Patenanspruches 1 gelöst.

Die Übertragung der Nachrichtenpakete nach dem Asynchronen Transfermodus erfolgt auf mindestens zwei völlig unterschiedlichen Übertragungswegen mit voneinander getrennten ATM-Vermittlungseinrichtungen oder ATM-Cross-Connectoren, die gemäß der EP-A1-384 936 redundant ausgelegt sein können. Somit ergeben sich redundante Verbindungen auf unterschiedlichen Wegen bis unmittelbar zum einzelnen Teilnehmer, damit bei Leitungsausfällen stets eine durchgängige Verbindung für eine ununterbrochene, störungsfreie Kommunikation zwischen einem ersten und einem zweiten Teilnehmer netzweit zur Verfügung steht. Durch den Ausgleich der durch die unterschiedlichen Übertragungswege bedingten Laufzeitunterschiede ist sichergestellt, daß lediglich statistische Schwankungen die Empfangszeitpunkte eines Nachrichtenpakets und deren Kopie beim Teilnehmer beeinflussen, nicht jedoch die durch die unterschiedlichen Übertragungswege gegebenen Abweichungen. Die Laufzeitunterschiede auf den netzweit ausgebildeten unterschiedlichen Übertragungswegen im Kommunikationsnetz können somit auf ein Minimum reduziert werden.

Vorteilhaft ist es, den Ausgleich der Laufzeitunterschiede durch Verzögerung der jeweils übertragenen Nachrichtenpakete mittels eines Pufferspeichers pro Übertragungsweg zu erreichen, bevor eines der eintreffenden identischen Nachrichtenpakete zum Teilnehmer ausgegeben wird.

Von Vorteil ist es auch, die übertragenen Nachrichtenpakete jeweils um ein Vielfaches eines einzigen Nachrichtenpakets verzögern zu können, wodurch der Ausgleich der Laufzeitunterschiede zwischen den verschiedenen Übertragungswegen in einfacher Weise aufeinander abgestimmt werden kann. Von Vorteil ist es, als Test-Nachrichtenpaket ein binäres Testmuster mit einer festgelegten Bitkombination zu verwenden, sodaß das Test-Nachrichtenpaket von den Nutzinformationen enthaltenden Nachrichtenpaketen unterschieden werden kann.

Die der Erfindung zugrundeliegende Aufgabe wird bezüglich der Schaltungsanordnung durch die im Patentanspruch 5 angegebenen Merkmale gelöst.

Die Erfindung wird anhand eines in der Zeichnung dargestellten Ausführungsbeispiels näher erläutert. Im einzelnen zeigen
Figur 1 ein Blockschaltbild eines ATM-Kommunikationsnetzes für die unterbrechungsfreie Übertragung von Nachrichtenpaketen auf verschiedenen netzweiten Übertragungswegen und
Figur 2 einen möglichen Aufbau einer in Figur 1 lediglich schematisch dargestellten Anschlußsteuereinrichtung bei den Teilnehmern des Kommunikationsnetzes.

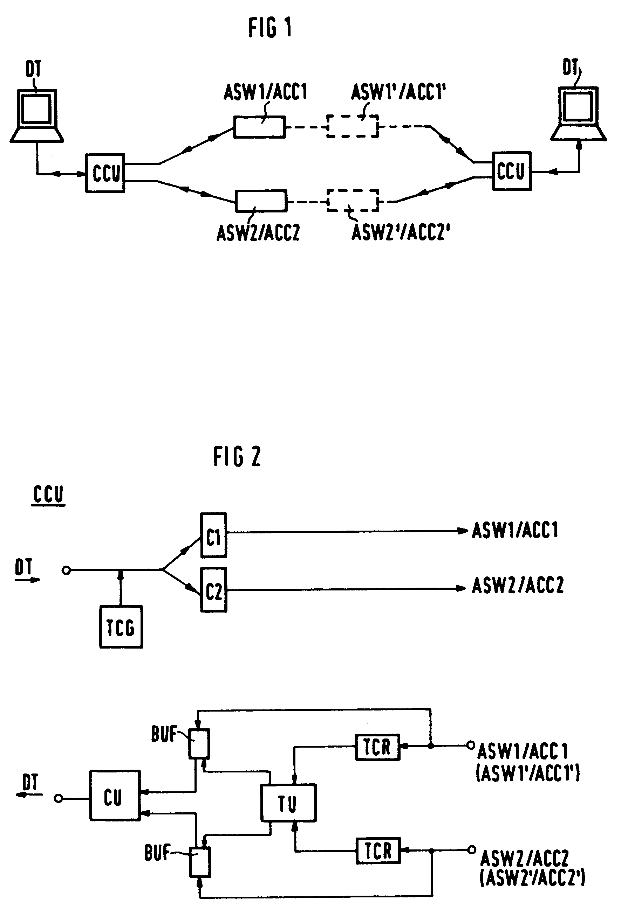

In Figur 1 sind zwei Teilnehmer eines Kommunikationsnetzes schematisch dargestellt, die über ihre Endgeräte DT, beispielsweise in Form von Datenterminals, Nachrichtenpakete im Zuge von virtuellen Verbindungen nach einem Asynchronen Übertragungsverfahren ("Asynchronous Transfer Mode - ATM") austauschen. Bei den Nachrichtenpaketen handelt es sich um Pakete fester Länge, die jeweils über einen Paketkopf mit die jeweilige virtuelle Verbindung bezeichnenden Angaben, sowie über einen Informationsteil verfügen. Der Informationsteil enthält die eigentlichen Nachrichtensignale, die außer Daten- auch Textsignale, sowie Sprach- und Bildsignale in digitaler Form umfassen können.

Der störungsfreie, ununterbrochene Datenaustausch basiert beispielsweise auf dem Redundanzprinzip entsprechend der EP-A1 384 936 für ATM-Vermittlungseinrichtungen oder für ATM-Cross-Connectoren, und ist netzweit auf Verbindungen bis unmittelbar zum Teilnehmer erweiten Die redundanten netzweiten Verbindungen sind dabei über unterschiedliche Übertragungswege im Kommunikationsnetz geführt, damit stets eine Verbindung von Leitungs- oder Systemausfällen nicht beeinträchtigt wird. Wie aus Figur 1 hervorgeht, ist beim jeweiligen Teilnehmer eine Anschlußsteuereinrichtung CCU angeordnet. Diese Anschlußsteuereinrichtung CCU weist Einrichtungen gemäß der Figur 2 auf, die in Abhängigkeit vom Aussenden oder Empfangen der Nachrichtenpakete aktiv sind.

Bei dem aus der EP-A1 384 936 bekannten Redundanzkonzept sind die parallelen Wege eines Nachrichtenpakets und dessen Kopie durch die ATM-Vermittlungseinrichtung gleich, während für die Übertragung eines Nachrichtenpakets und dessen Kopie im vorliegenden ATM-Kommunikationsnetz völlig unterschiedliche Übertragungswege mit voneinander getrennten ATM-Vermittlungseinrichtungen oder ATM-Cross-Connectoren gewählt werden. Wie aus Figur 1 hervorgeht, weist ein erster Übertragungsweg eine oder mehrere aufeinanderfolgende ATM-Vermittlungseinrichtungen ASW1, ASW1' oder ATM-Cross-Connectoren ACC1, ACC1' auf, während in einem zweiten Übertragungsweg eine oder mehrere ATM-Vermittlungseinrichtungen ASW2, ASW2' oder ATM-Cross-Connectoren ACC2, ACC2' liegen. Die einzelnen ATM-Vermittlungseinrichtungen ASW1... oder ATM-Cross-Connectoren ACC1... verfügen jeweils über eine Mehrzahl von Zubringerleitungen und Abnehmerleitungen, über die die Übertragung der Nachrichtenpakete im Zuge der virtuellen Verbindungen erfolgt

In Figur 2 ist ein möglicher Aufbau der beim Teilnehmer angeordneten Anschlußsteuereinrichtung CCU dargestellt, die neben einigen aus der EP-A1 384 936 bekannten sendeseitigen und empfangsseitigen Funktionen gesonderte Aufgaben mittels entsprechender Einrichtungen übernimmt. Dabei sind nur diejenigen Schaltungsteile der Anschlußsteuereinrichtung CCU schematisch angegeben, die für das Verständnis der vorliegenden Erfindung erforderlich sind.

Die sendeseitige Funktion in der Anschlußsteuereinrichtung CCU unfaßt den verschiedenen Übertragungswegen zugeordnete Einrichtungen C1 und C2 zur Aufnahme des auf der Anschlußleitung vom Datenterminal DT ankommenden Nachrichtenpakets und zur Festlegung der beiden für die Übertragungswege individuellen Verbindungen im Netz. Die jeweilige Verbindung durch das ATM-Netz vom ersten zum zweiten Teilnehmer wird durch eine virtuelle Kanalnummer (virtual channel identifier, VCI) in Kombination mit einer virtuellen Pfadnummer (virtual path identifier, VPI) hergestellt. Beide im Paketkopf der eintreffenden Nachrichtenpakets enthaltenen Nummern werden von den Einrichtungen C1 und C2 in individuell für jeden Übertragungsweg festgelegte Nummern umgesetzt, die zur Weiterleitung des Nachrichtenpakets über die für die jeweilige virtuelle Verbindung in Frage kommende Abnehmerleitung der ATM-Vermittlungseinrichtung ASW1 oder der ATM-Cross-Connectors ACC1 und der ATM-Vermittlungseinrichtung ASW2 oder des ATM-Cross-Connectors ACC2 dienen.

Darüber hinaus wird eine Folgenummer für die eindeutige Zuordnung des über den ersten Übertragungsweg vermittelten Nachrichtenpakets zu dem identischen auf dem zweiten Übertragungsweg vermittelten Nachrichtenpaket mitübertragen. Diese Folgenummer besteht beispielsweise aus der in der ATM-Anpassungsschicht (ATM Adaptation Layer) zur Überwachung der Paketreihenfolge verwendeten Reihenfolgenumerierung (sequence number).

Zur Gewährleistung der eindeutigen Zuordnung der auf völlig verschiedenen Übertragungswegen vermittelten identischen Nachrichtenpakete wird nach einem Verbindungsaufbau der Unterschied zwischen den gegebenenfalls stark voneinander abweichenden Laufzeiten der beiden durch die ATM-Vermittlungseinrichtungen ASW1... oder ATM-Cross-Connectoren ACC1... und durch die ATM-Vermittlungseinrichtungen ASW2... oder ATM-Cross-Connectoren ACC2... vermittelten Nachrichtenpakete ermittelt. Dabei wird sendeseitig von einer Einrichtung TCG in der Anschlußsteuereinrichtung CCU ein oder mehrere Test-Nachrichtenpakete, jeweils bestehend aus einem Testmuster festgelegter Bitkombination, erzeugt und jeweils als erste Information vor den eigentlichen Nachrichtensignalen sowohl auf dem ersten als auch auf dem zweiten Übertragungsweg zur Empfangsseite übertragen.

Die empfangsseitige Funktion in der Anschlußsteuereinrichtung CCU umfaßt jeweils eine Erfassungseinrichtung TCR pro Übertragungsweg, von der die durch die ATM-Vermittlungseinrichtungen ASW1... bzw. ASW2... oder durch die ATM-Cross-Connectoren ACC1... bzw. ACC2... vermittelten identischen Test-Nachrichtenpakete erkannt und einer an die Erfassungseinrichtungen TCR angeschalteten Auswerteeinrichtung TU zur Verfügung gestellt werden. Die Auswerteeinrichtung TU ermittelt die Empfangszeitpunkte der auf den beiden verschiedenen Übertragungswegen ankommenden Test-Nachrichtenpakete identischen Inhalts und steuert anhand der ermittelten Empfangszeitpunkte einen im jeweiligen Übertragungsweg liegenden Pufferspeicher BUF derart, daß das zuerst eintreffende Test-Nachrichtenpaket gegenüber dem später eintreffenden identischen Test-Nachrichtenpaket verzögert wird. Der Pufferspeicher BUF ist beispielsweise als Durchlaufspeicher (FIFO-Speicher) ausgebildet.

Die Verzögerung des einen Nachrichtenpakets gegenüber dem anderen Nachrichtenpaket erfolgt dabei in Vielfachen eines einzigen Nachrichtenpakets. Die beiden für die verschiedenen Übertragungswege vorgesehenen Pufferspeicher BUF sind ausgangsseitig mit einer weiteren Einrichtung CU verbunden, die wie die aus der EP-A1 384 936 bekannten Auswerteeinrichtung die auf den unterschiedlichen Übertragungswegen vermittelten Nachrichtenpakete übernimmt und durch Auswerten der den identischen Nachrichtenpaketen jeweils beigefügten Folgenummer lediglich eines der beiden Nachrichtenpakete über die Anschlußleitung zum Datenterminal DT an den Teilnehmer auf der Empfangsseite ausgibt.

Durch die gesonderten Einrichtungen in der Anschlußsteuereinrichtung CCU ist ein ununterbrochener, störungsfreier Datenaustausch auf verschiedenen Übertragungswegen bis hin zum Teilnehmer gewährleistet, wobei Laufzeitunterschiede, die durch die verschiedenen Übertragungswege im Kommunikationsnetz bedingt sind, auf ein Minimum reduziert sind. Damit ist sichergestellt, daß lediglich statistische Schwankungen, nicht jedoch auftretende Laufzeitunterschiede auf den beiden netzweiten Verbindungen den Eintreffzeitpunkt eines Nachrichtenpakets und dessen Kopie bei den Teilnehmern beeinflussen.

Eine Anwendung der vorliegenden Erfindung besteht beispielsweis in einem Breitband-Kommunikationsnetz, beispielsweise dem Breitband-ISDN (Integrated Services Digital Network), bei dem für die Verbindungen zwischen den Teilnehmern eine hohe Ausfallsicherheit gefordert wird. Insbesondere Datenanwendungen, wie z.B. die Kopplung mehrerer Rechenzentren oder interner Datennetze über ein derartiges Breitband-Kommunikationsnetz, bedürfen eines störungsfrei funktionierenden Kommunikationsbetriebs, da ansonsten bei den hohen Datenraten der einzelnen ATM-Leitungen der Ausfall einer einzigen Breitbandleitung eine Vielzahl von Benutzern erfaßt.

## Patentansprüche

1. Verfahren zur Übertragung von Nachrichtenpaketen nach dem Asynchronen Transfermodus (ATM) im Zuge von virtuellen Verbindungen über mindestens eine ATM-Vermittlungseinrichtung (ASW1...) oder einen ATM-Cross-Connector (ACC1...) in einem mehrere Teilnehmer aufweisenden Kommunikationsnetz,
**dadurch gekennzeichnet,**
- daß von einer Anschlußsteuereinrichtung (CCU) eines sendenden Teilnehmers vor der Übertragung des ersten Nachrichtenpakets identische Test-Nachrichtenpakete auf mindestens zwei verschiedenen Übertragungswegen mit voneinander getrennten ATM-Vermittlungseinrichtungen (ASW1..., ASW2...) oder ATM-Cross-Connectoren (ACC1..., ACC2) übertragen werden,
- daß von der Anschlußstreuereinrichtung (CCU) des empfangenden Teilnehmers Empfangszeitpunkte für die auf den verschiedenen Übertragungswegen vermittelten Test-Nachrichtenpakete ermittelt und Unterschiede in den Laufzeiten der auf den verschiedenen Übertragungswegen vermittelten Test-Nachrichtenpakete anhand der Empfangszeitpunkte ausgeglichen werden und
- daß identische Nachrichtenpakete zwischen den Teilnehmern jeweils auf den verschiedenen Übertragungswegen mit den voneinander getrennten ATM-Vermittlungseinrichtungen (ASW1..., ASW2...) oder ATM-Cross-Connectoren (ACC1..., ACC2) übertragen und jeweils eines dieser Nachrichtenpakete ausgegeben werden.

2. Verfahren nach Anspruch 1,
**dadurch gekennzeichnet,**
daß zum Ausgleich der Laufzeitunterschiede die Anschlußsteuereinrichtung (CCU) pro Übertragungsweg über einen Pufferspeicher (BUF) zur Verzögerung der übertragenen Nachrichtenpakete verfügt.

3. Verfahren nach Anspruch 2,
**dadurch gekennzeichnet,**
daß die übertragenen Nachrichtenpakete jeweils um ein Vielfaches eines Nachrichtenpakets verzögert werden können.

4. Verfahren nach einem der Ansprüche 1 bis 3,
**dadurch gekennzeichnet,**
daß als Test-Nachrichtenpaket ein binäres Testmuster mit einer festgelegten Bitkombination verwendet wird.

5. Schaltungsanordnung zur Übertragung von Nachrichtenpaketen nach dem Asynchronen Transfermodus (ATM) im Zuge von virtuellen Verbindungen über mindestens eine ATM-Vermittlungseinrichtung (ASW1...) oder einen ATM-Cross-Connector (ACC1...) in einem mehrere Teilnehmer aufweisenden Kommunikationsnetz,
**dadurch gekennzeichnet,**
daß zwischen Teilnehmern des Kommunikationsnetzes mindestens zwei verschiedene Übertragungswege mit voneinander getrennten ATM-Vermittlungseinrichtungen (ASW1..., ASW2...) oder ATM-Cross-Connectoren (ACC1..., ACC2) vorgesehen sind, deren Zubringer- und Abnehmerleitungen jeweils mit einer Anschlußteuereinrichtung (CCU) eines sendenden und eines empfangenden Teilnehmers verbunden sind und daß die Anschlußsteuereinrichtung (CCU) aufweist:
- eine Einrichtung (TCG) zur Erzeugung eines Test-Nachrichtenpakets, das vor der Übertragung des ersten Nachrichtenpakets vom sendenden Teilnehmer bereitgestellt und auf den verschiedenen Übertragungswegen über die getrennten ATM-Vermittlungseinrichtungen (ASW1..., ASW2...) oder ATM-Cross-Connectoren (ACC1..., ACC2) übertragen wird,
- eine Einrichtung (TU) zur Ermittlung von Empfangszeitpunkten für die auf den verschiedenen Übertragungswegen vermittelten Test-Nachrichtenpakete,
- Einrichtungen zum Ausgleich von Unterschieden in den Laufzeiten der vermittelten Nachrichtenpakete anhand der ermittelten Empfangszeitpunkte, sowie
- eine Einrichtung (CU) zur Ausgabe eines von mehreren auf den verschiedenen Übertragungswegen über die getrennten ATM-Vermittlungseinrichtungen (ASW1..., ASW2...) oder ATM-Cross-Connectoren (ACC1..., ACC2) übertragenen identischen Nachrichtenpaketen.

6. Schaltungsanordnung nach Anspruch 5,
**dadurch gekennzeichnet,**
daß die Einrichtungen zum Ausgleich von Laufzeitunterschieden aus jeweils einem Pufferspeicher (BUF) pro Übertragungsweg zur Verzögerung der übertragenen Nachrichtenpakete bestehen.
